# FASCICULE DE BREVET EUROPEEN

(11) **EP 1 844 648 B1**
(45) Date de publication et mention de la délivrance du brevet: **17.06.2009**
(21) Numéro de dépôt: 07290437.8
(22) Date de dépôt: 10.04.2007
(51) Int. Cl.: A01J 25/11

(54) **Plateau reversible pour l'egouttage de fromages, et empilement comprenant au moins deux tels plateaux**
Umkehrbare Platte zum Abtropfenlassen von Käse und Stapelvorrichtung, die mindestens zwei solcher Platten umfasst
Reversible plate for draining cheese, and stack comprising at least two such plates

(30) Priorité: 10.04.2006 FR 0603169
(43) Date de publication de la demande: 17.10.2007
(73) Titulaire: Servi Doryl, 37130 Langeais (FR)
(72) Inventeur: Helaine, Christian Clément Eugène, 37130 Cinq Mars La Pile (FR)
(74) Mandataire: Kedinger, Jean-Paul

(56) Documents cités:
- EP-A2- 0 235 675
- FR-A- 2 556 559
- FR-A1- 2 443 199

## Description

La présente invention concerne un plateau réversible pour l'égouttage de fromages, utilisable avec d'autres plateaux similaires associés à des stores et des blocs-moules sous la forme d'un empilement.

Dans le domaine de l'affinage des fromages, notamment à pâte molle, il est courant d'utiliser des plateaux d'égouttage rigides. La fonction principale de ce type de plateau est de supporter en position horizontale une sorte de filtre ou de tamis d'égouttage (appelé store ou paillon) sur lequel reposent les fromages confinés dans des moules regroupés dans un bloc-moules. Pour cela, on réalise un ensemble superposé comprenant plusieurs plateaux identiques, des stores inférieurs, des stores supérieurs et des blocs-moules interposés entre deux stores fixés l'un en face de l'autre sur deux plateaux consécutifs de la pile. Ces ensembles, pouvant par exemple contenir une dizaine de plateaux, sont maintenus empilés pendant une durée comprise entre quelques heures et quelques jours pour obtenir un bon égouttage de la pâte. De plus, ils doivent être retournés régulièrement, soit mécaniquement, soit manuellement voir par exemple le document FR-A-2 443 199.

Un problème important rencontré couramment avec ce type de plateaux concerne l'élimination du sérum suintant des fromages pendant leur égouttage. En effet, lorsque les plateaux sont empilés les uns au-dessus des autres, avec un bloc-moules interposé entre deux stores se faisant face, le sérum suintant des fromages reposant sur un plateau peut couler sur les fromages des plateaux inférieurs, ce qui nuit notablement au bon égouttage de ces fromages. Le sérum peut aussi stagner sur les plateaux, ce qui humidifie l'air et gène la circulation de celui-ci autour des fromages qui sont de ce fait mal climatisés.

Toutes les solutions proposées jusqu'à présent n'ont pas donné satisfaction parce qu'elles ne permettaient pas une évacuation rapide et efficace du sérum, ni une ventilation suffisante des fromages, ou parce que le sérum continuait à stagner sur les plateaux et refroidissait l'air par un phénomène d'évaporation perturbant la climatisation des fromages.

Un but de la présente invention est donc de remédier à ces inconvénients en proposant une solution simple à mettre en oeuvre, peu onéreuse et d'une grande fiabilité.

Pour cela, il est proposé de munir le plateau d'un plan incliné pour l'écoulement du sérum suintant des fromages, tout en permettant de disposer les blocs-moules de manière horizontale.

Plus précisément, la présente invention a pour objet un plateau réversible pour l'égouttage de fromages, comprenant un cadre comportant deux grandes faces parallèles délimitées par quatre côtés opposés deux à deux, une paroi s'appuyant sur les côtés du cadre tout en s'inclinant depuis l'un des côtés jusqu'au côté opposé, au moins une ouverture ménagée dans chacun des côtés du cadre au niveau desquels sont situées les extrémités amont et aval de la paroi inclinée, les ouvertures étant situées de part et d'autre de la paroi inclinée, respectivement entre l'extrémité aval de celle-ci et la grande face correspondante du cadre, des supports faisant saillie sur chacune des faces de la paroi inclinée de façon à définir deux surfaces porteuses parallèles aux grandes faces du cadre, et des moyens pour fixer un store d'égouttage sur chacune des surfaces porteuses.

Selon des modes de réalisation préférés de la présente invention :
- chacune des ouvertures affleure la face correspondante de la paroi inclinée ;
- les supports sont constitués par des nervures parallèles faisant saillie sur chacune des deux faces de la paroi inclinée, ces nervures étant perpendiculaires aux côtés du cadre dans lesquels sont ménagées les ouvertures ;
- les nervures sont solidaires des côtés du cadre dans lesquels sont ménagées les ouvertures et délimitent entre elles des canaux débouchant chacun au niveau d'une ouverture ;
- les nervures présentent une forme triangulaire, leur hauteur augmentant depuis l'extrémité amont vers l'extrémité aval de la paroi dont l'angle d'inclinaison est de l'ordre de 1 à 5 degrés;
- des entretoises transversales de renfort sont prévues entre les nervures parallèles de chaque face de la paroi inclinée ;
- le plateau constitue un élément monobloc en matière plastique.

La présente invention se rapporte également à un ensemble formé d'un empilement d'au moins deux plateaux réversibles tels que définis précédemment, de stores d'égouttage plans reposant sur les surfaces porteuses de chaque plateau, et d'au moins un bloc-moules pour fromages interposé entre les stores se faisant face de deux plateaux successifs.

Avantageusement, chaque store est pourvu d'orifices traversants, chaque orifice étant situé au regard d'une cheminée délimitée par quatre moules voisins du bloc-moules.

De manière préférée, chaque store est muni de protubérances de positionnement coopérant avec les moyens de fixation prévus sur les plateaux.

L'invention va maintenant être décrite plus en détail en référence à un mode de réalisation particulier donné à titre d'illustration uniquement et représenté sur les figures annexées dans lesquelles :
- la figure 1 est une vue en perspective d'un ensemble constitué d'un empilement de deux plateaux d'égouttage de fromages conformes à la présente invention, d'un bloc-moules et de deux stores d'appui,
- la figure 2 est une vue de dessus d'un plateau de la figure 1,
- la figure 3 est une vue en coupe selon la ligne III-III de la figure 2 ; et
- la figure 4 est une vue en coupe d'un empilement de plateaux, de blocs-moules et de stores conformément à la présente invention.

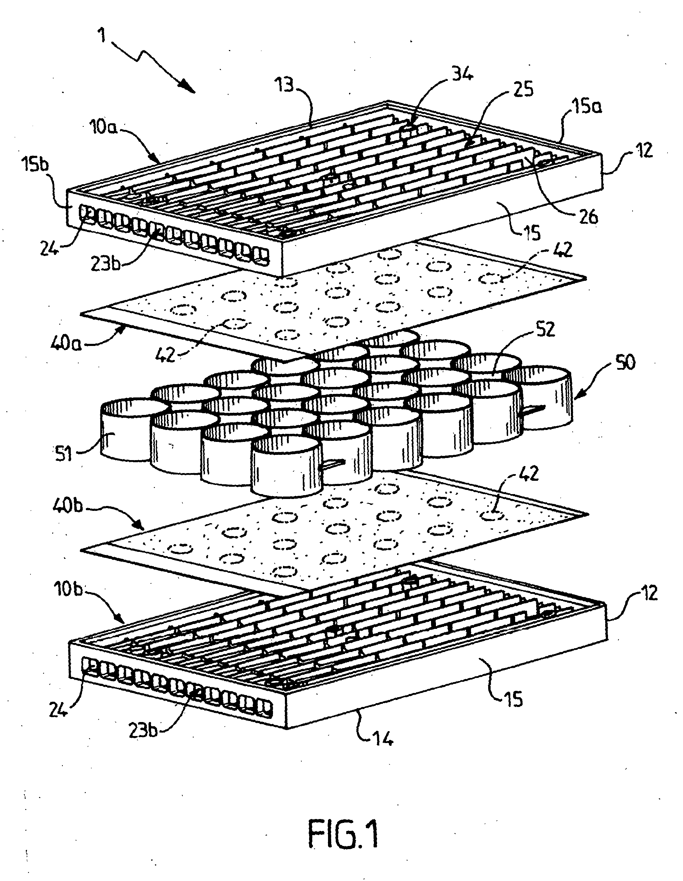

La figure 1 illustre un ensemble 1 formant un empilement de plateaux réversibles d'égouttage de fromages, de stores d'appui et de blocs-moules, conformément à la présente invention. Plus précisément, l'empilement 1 comporte un plateau supérieur 10a, un plateau inférieur 10b, un store supérieur 40a disposé au-dessous du plateau supérieur 10a, un store inférieur 40b disposé au-dessus du plateau inférieur 10b, et un bloc-moules 50 intercalé entre les stores 40a et 40b fixés l'un en face de l'autre sur les deux plateaux consécutifs 10a et 10b. Cet ensemble 1 est utilisé pour permettre au sérum suintant des fromages en cours d'égouttage de s'écouler correctement afin d'être éliminé. Toutes ces pièces sont réalisées en matière plastique moulée conforme aux normes d'hygiène en vigueur, par exemple en polyéthylène ou en polypropylène.

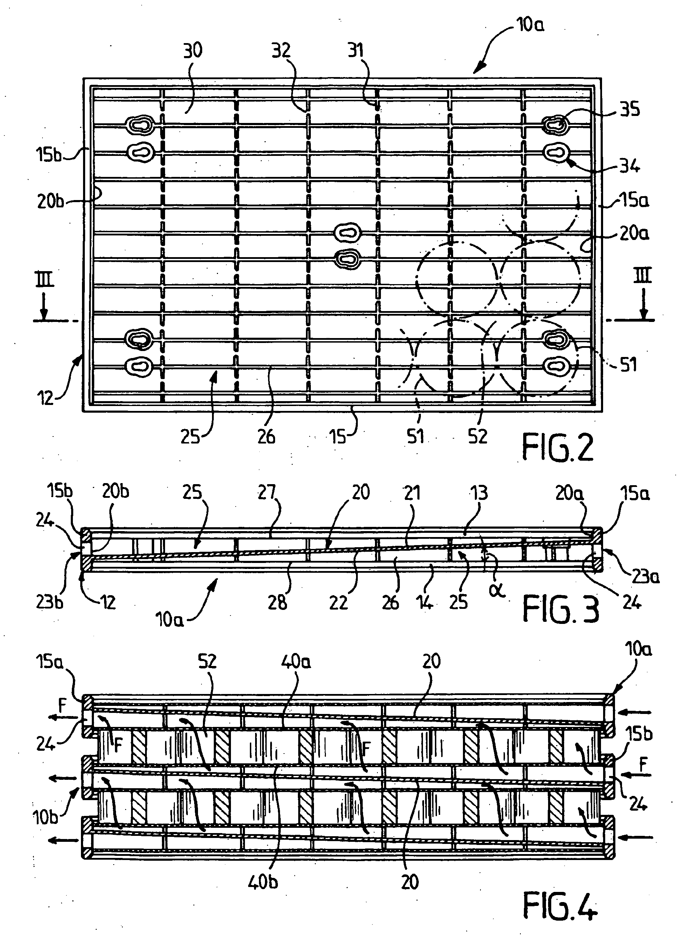

Comme cela est représenté plus en détail sur les figures 2 à 4, chaque plateau 10a ou 10b comprend un cadre 12 de forme rectangulaire comportant une grande face supérieure 13 et une grande face inférieure 14, lesdites faces étant parallèles entre elles et délimitées par quatre côtés 15 opposés deux à deux. Le cadre 12 est solidaire d'une paroi plane inclinée 20 qui s'appuie sur les quatre côtés 15. La paroi inclinée 20 comporte deux faces opposées 21 et 22 et s'abaisse de façon continue d'un premier côté amont 15a vers un second côté opposé aval 15b. Dans le cas présent, le sens de l'amont vers l'aval correspond au sens d'écoulement du sérum par gravité le long de la paroi inclinée 20, c'est-à-dire de l'extrémité amont 20a à l'extrémité aval 20b de celle-ci.

Deux séries d'ouvertures 23a et 23b sont définies respectivement dans les côtés amont 15a et aval 15b du cadre 12, de part et d'autre de la paroi inclinée 20. Comme cela est visible plus précisément sur la figure 3, les séries d'ouverture 23a et 23b affleurent respectivement les faces 21 et 22 de la paroi inclinée 20 pour faciliter la sortie du sérum vers l'extérieur des plateaux. Chaque série d'ouverture 23a et 23b est constituée par plusieurs orifices identiques 24 séparés par des portions verticales de matière.

Des supports 25 font saillie perpendiculairement sur chacune des faces 21 et 22 de la paroi inclinée 20. Ces supports 25 se présentent sous la forme de nervures longitudinales 26 s'étendant de manière continue entre les côtés amont 15a et aval 15b du cadre 12, sensiblement perpendiculairement à ceux-ci. Les nervures 26 définissent respectivement, de chaque côté de la paroi inclinée 20, des surfaces porteuses 27 et 28 destinées à servir de supports, l'une à un store supérieur et l'autre à un store inférieur.

Chaque nervure 26 d'une face 21 ou 22 présente une forme sensiblement triangulaire plus haute au niveau du côté aval 15b que du côté amont 15a, leur hauteur diminuant régulièrement pour devenir sensiblement nulle au niveau du côté amont 15a. Ainsi, grâce à la variation régulière de cette hauteur, les nervures 26 compensent exactement l'angle d'inclinaison α de la paroi inclinée 20 et permettent aux surfaces porteuses 27 et 28 d'être parallèles aux grandes faces 13 et 14 du cadre 12.

L'angle α défini entre la paroi inclinée 20 et l'une ou l'autre des deux grandes faces parallèles 13 et 14 du plateau 10 est typiquement de l'ordre de 1 à 5 degrés.

Bien entendu, en raison de la symétrie du plateau, lorsque celui-ci est retourné, le côté amont 15a devient le côté aval 15b, et inversement.

Les nervures adjacentes 26 définissent entre elles des canaux 30 dans lesquels le sérum est destiné à circuler du côté amont 15a vers le côté aval 15b. Chaque canal 30 débouche dans un orifice 24. L'utilisation des canaux 30 et des orifices 24 sera expliquée plus en détail ultérieurement.

Des entretoises transversales de renfort 31 sont prévues entre deux nervures adjacentes 26 pour rigidifier la paroi inclinée 20. Ces entretoises 31, qui sont perpendiculaires aux nervures 26, sont espacées longitudinalement de quelque centimètres les unes des autres le long de chaque canal 30 et présentent chacune une zone centrale 32 dépourvue de matière pour permettre au sérum de s'écouler dans chaque canal 30.

Des moyens 34 sont prévus sur la paroi inclinée 20 pour positionner les stores. Dans le mode de réalisation représenté sur les dessins, ces moyens comprennent des orifices 35 destinés à recevoir des protubérances (non représentées) ménagées sur l'une des faces de chaque store.

Comme cela est représenté sur la figure 1, l'ensemble 1 comprend également un bloc-moules 50. Ce bloc-moules 50 est constitué d'un réseau régulier de moules identiques 51 disposés en lignes et en colonnes et reliés entre eux, ces moules étant ouverts des deux côtés pour recevoir le fromage à égoutter. Chaque ensemble de quatre moules 51 immédiatement voisins délimite une cheminée 52 de circulation verticale d'air.

Les stores 40a et 40b présentent des orifices traversants 42 qui sont disposés en regard desdites cheminées 52 lorsque le bloc-moules 50 est inséré entre deux stores fixés l'un en face de l'autre sur deux plateaux 10a et 10b immédiatement adjacents dans l'empilement.

Ainsi, comme cela est illustré par les flèches F de la figure 4, l'air peut entrer par les orifices 24 du côté aval 15b d'un plateau inférieur 10b, circuler sous le store 40b fixé sur ce plateau inférieur, traverser verticalement les orifices 42 du store 40b et les cheminées 52 du bloc-moules 50 posé sur ce dernier, passer au travers des orifices 42 du store supérieur 40a, circuler sous et le long de la paroi inclinée 20 du plateau supérieur 10a pour enfin sortir par les orifices 24 du côté amont 15a dudit plateau supérieur 10a.

De cette façon, les fromages placés dans les blocs-moules 50 sont bien aérés par ce courant d'air forcé. Ceci contribue également à une meilleure élimination du sérum. En effet, le sérum suinte des fromages d'un bloc-moules 50, traverse le store sur lequel ledit bloc-moules est posé, par exemple le store 40b de la figure 4, tombe par gravité sur la paroi inclinée 20 du plateau sur lequel repose le store, par exemple le plateau 10b, et s'écoule dans les différents canaux 30 de la paroi inclinée afin d'être évacué vers l'extérieur par les orifices 24 du côté aval 15b du plateau. De cette façon, le sérum ne stagne pas sur le plateau et son élimination est nettement meilleure que dans les dispositifs de l'art antérieur.

Les avantages du plateau selon la présente invention sont les suivants :
- bonne canalisation et bon drainage du sérum à l'extérieur des plateaux empilés ;
- obtention d'un plan incliné auto-drainant tout en gardant des faces d'appui horizontales pour les stores ;
- facilité de lavage des plateaux, notamment en position verticale ;
- Légèreté ;
- Réversibilité ;
- Rigidité ;
- échanges thermiques améliorés avec les fromages en cours d'égouttage, ce qui permet une meilleure homogénéité de la température des fromages ;
- installation et enlèvement aisés des stores.

Il va toutefois de soi que la description détaillée, donnée uniquement à titre d'illustration de l'objet de l'Invention, ne constitue en aucune manière une limitation, les équivalents techniques étant également compris dans le champ de la présente invention.

Ainsi, les orifices 24 peuvent être remplacés par une seule et unique ouverture oblongue, sans paroi verticale de séparation, dans laquelle aboutissent les canaux 30.

Les nervures 26 peuvent être discontinues pour économiser de la matière première, dès lors qu'elles permettent toujours de former des surfaces porteuses 27 et 28 parallèles aux grandes faces 13 et 14 du cadre 12, et que leur pente compense l'angle d'inclinaison α de la paroi 20.

Chaque plateau peut présenter une autre forme que celle représentée, notamment une forme carrée.

Les orifices 42 peuvent être supprimés dès lors que l'air peut continuer de passer au travers des stores pour ventiler les fromages.

## Revendications

1. Plateau réversible (10a ; 10b) pour l'égouttage de fromages, comprenant un cadre (12) comportant deux grandes faces parallèles (13, 14) délimitées par quatre côtés (15) opposés deux à deux, une paroi (20) s'appuyant sur les côtés (15) du cadre, et des canaux (30) prévus sur les deux faces de la paroi (20) pour diriger le sérum extrait des fromages, pendant leur égouttage, vers des ouvertures (23a ; 23b) ménagées dans deux côtés opposés (15a,15b) du cadre, **caractérisé en ce que** la paroi (20) est inclinée et comporte ainsi des extrémités amont et aval respectivement reliées aux deux côtés opposés (15a,15b) du cadre (12) dans lesquels sont ménagées les ouvertures (23a ; 23b), **en ce que** lesdites ouvertures sont réparties en deux séries situées chacune uniquement d'un côté de la paroi inclinée (20), chaque série d'ouvertures étant située entre une extrémité aval de la paroi inclinée et la grande face adjacente du cadre, **en ce que** les canaux (30) sont séparés par des supports (25) faisant saillie sur chacune des faces (21,22) de la paroi inclinée (20) et définissant deux surfaces porteuses (27, 28) parallèles aux grandes faces (13,14) du cadre (12), et **en ce que** des moyens (34) sont prévus pour fixer un store d'égouttage (40a, 40b) sur chacune des surfaces porteuses (27,28).

2. Plateau selon la revendication 1**, caractérisé en ce que** chacune des ouvertures (23a ; 23b) affleure la face correspondante (21 ; 22) de la paroi inclinée (20).

3. Plateau selon la revendication 1 ou 2, **caractérisé en ce que** les supports (25) sont constitués par des nervures (26) parallèles faisant saillie sur chacune des deux faces (21, 22) de la paroi inclinée (20), ces nervures (26) étant perpendiculaires aux côtés (15a, 15b) du cadre (12) dans lesquels sont ménagées les ouvertures (23a, 23b).

4. Plateau selon la revendication 3, **caractérisé en ce que** les nervures (26) sont solidaires des côtés (15a, 15b) du cadre (12) dans lesquels sont ménagées les ouvertures (23a, 23b) et délimitent entre elles les canaux (30) qui débouchent chacun au niveau d'une ouverture (23a, 23b).

5. Plateau selon la revendication 3 ou 4, **caractérisé en ce que** les nervures (26) présentent une forme triangulaire, leur hauteur augmentant depuis l'extrémité amont (15a) à l'extrémité aval (15b) de la paroi (20) dont l'angle d'inclinaison (α) est de l'ordre de 1 à 5 degrés.

6. Plateau selon l'une quelconque des revendications 3 à 5, **caractérisé en ce que** des entretoises transversales de renfort (31) sont prévues entre les nervures parallèles (26) de chaque face (21, 22) de la paroi inclinée (20).

7. Plateau selon l'une quelconque des revendications précédentes, **caractérisé en ce qu'**il constitue un élément monobloc en matière plastique.

8. Ensemble (1) formé d'un empilement d'au moins deux plateaux réversibles (10a, 10b) selon l'une quelconque des revendications précédentes, de stores d'égouttage plans (40a, 40b) fixés contre les surfaces porteuses (27, 28) de chaque plateau (10a, 10b), et d'au moins un bloc-moules (50) pour fromages interposé entre les stores (40a, 40b) se faisant face de deux plateaux successifs (10a, 10b).

9. Ensemble selon la revendication 8, **caractérisé en ce que** chaque store (40a, 40b) est pourvu d'orifices (42) traversants, chaque orifice (42) étant situé au regard d'une cheminée (52) délimitée par quatre moules voisins (51) du bloc-moules (50).

10. Ensemble selon la revendication 8 ou 9, **caractérisé en ce que** chaque store (40a, 40b) est muni de protubérances de positionnement coopérant avec les moyens de fixation (34) prévus sur les plateaux (10a, 10b).

## Claims

1. A reversible plate (10a; 10b) for draining cheeses, comprising a frame (12) including two large parallel faces (13, 14) delimited by four sides (15) opposing one another in pairs, a wall (20) bearing against the sides (15) of the frame and channels (30) provided on the two faces of the wall (20) to direct the serum extracted from the cheeses during the draining thereof towards openings (23a; 23b) formed in two opposing sides (15a, 15b) of the frame, **characterised in that** the wall (20) is inclined and thus includes upstream and downstream ends respectively connected to the two opposing sides (15a, 15b) of the frame (12) in which the openings (23a; 23b) are formed, **in that** the said openings are distributed in two rows each situated only on one side of the inclined wall (20), each row of openings being situated between a downstream end of the inclined wall and the large adjacent face of the frame, **in that** the channels (30) are separated by supports (25) projecting over each of the faces (21, 22) of the inclined wall (20) and defining two bearing surfaces (27, 28) parallel to the large faces (13, 14) of the frame (12) and **in that** means (34) are provided for fixing a draining screen (40a, 40b) to each of the bearing surfaces (27, 28).

2. A plate according to claim 1, **characterised in that** each of the openings (23a; 23b) is flush with the corresponding face (21; 22) of the inclined wall (20).

3. A plate according to claim 1 or claim 2, **characterised in that** the supports (25) are formed by parallel ribs (26) projecting over each of the two faces (21, 22) of the inclined wall (20), these ribs (26) being perpendicular to the sides (15a, 15b) of the frame (12) in which the openings (23a, 23b) are formed.

4. A plate according to claim 3, **characterised in that** the ribs (26) are integral with the sides (15a, 15b) of the frame (12) in which the openings (23a, 23b) are formed and delimit between them the channels (30) each leading to one opening (23a, 23b).

5. A plate according to claim 3 or claim 4, **characterised in that** the ribs (26) have a triangular shape, their height increasing from the upstream end (15a) to the downstream end (15b) of the wall (20), the angle of inclination (α) of which is approximately 1 to 5 degrees.

6. A plate according to any one of claims 3 to 5, **characterised in that** reinforcing cross members (31) are provided between the parallel ribs (26) of each face (21, 22) of the inclined wall (20).

7. A plate according to any one of the preceding claims, **characterised in that** it forms a one-piece element made of plastic.

8. An assembly (1) formed by a stack of at least two reversible plates (10a, 10b) according to any one of the preceding claims, flat draining screens (40a, 40b) fixed to the bearing surfaces (27, 28) of each plate (10a, 10b) and at least one mould block (50) for cheeses interposed between the screens (40a, 40b) facing two successive plates (10a, 10b).

9. An assembly according to claim 8, **characterised in that** each screen (40a, 40b) is provided with through orifices (42), each orifice (42) being situated opposite a shaft (52) delimited by four adjacent moulds (51) of the mould block (50).

10. An assembly according to claim 8 or claim 9, **characterised in that** each screen (40a, 40b) is provided with positioning lugs cooperating with the fixing means (34) provided on the plates (10a, 10b).

## Patentansprüche

1. Wendeplatte (10a; 10b) zum Abtropfen von Käsen, mit einem Rahmen (12), der zwei große parallele Flächen (13, 14) aufweist, die von vier paarweise entgegensetzten Seiten (15) begrenzt sind, einer Wand (20), die sich an den Seiten (15) des Rahmens abstützt, und Kanälen (30), die an den beiden Flächen der Wand (20) zum Lenken des aus den Käsen bei deren Abtropfen entzogenen Serums auf Öffnungen (23a; 23b) in zwei entgegengesetzten Seiten (15a, 15b) des Rahmens vorgesehen sind,
**dadurch gekennzeichnet, dass** die Wand (20) schräg liegt und also stromaufwärts und stromabwärts liegende Enden aufweist, die je mit den zwei entgegengesetzten Seiten (15a, 15b) des Rahmens (12) verbunden sind, in denen die Öffnungen (23a; 23b) vorgesehen sind, dass die Öffnungen in zwei Gruppen verteilt sind, die je nur auf einer Seite der schrägen Wand (20) stehen, wobei jede Öffnungsgruppe sich zwischen einem stromabwärts liegenden Ende der schrägen Wand und der anliegenden großen Rahmenfläche befindet, dass die Kanäle (30) durch Stützen (25) getrennt sind, die aus jeder Fläche (21, 22) der schrägen Wand (20) vorspringen und zwei zu den großen Flächen (13, 14) des Rahmens (12) parallele Tragflächen (27, 28) bilden, und dass Mittel (34) zur Befestigung einer Abtropfmatte (40a, 40b) auf jeder Tragfläche (27, 28) vorgesehen sind.

2. Platte nach Anspruch 1, **dadurch gekennzeichnet, dass** jede der Öffnungen (23a; 23b) bündig mit der entsprechenden Fläche (21; 22) der schrägen Wand (20) liegt.

3. Platte nach Anspruch 1 oder 2, **dadurch gekennzeichnet, dass** die Stützen (25) aus parallelen, aus jeder Fläche (21, 22) der schrägen Wand (20) vorspringenden Stegen (26) bestehen, wobei die Stege (26) senkrecht zu den Seiten (15a, 15b) des Rahmens (12) verlaufen, in denen die Öffnungen (23a, 23b) vorgesehen sind.

4. Platte nach Anspruch 3, **dadurch gekennzeichnet, dass** die Stege (26) mit den Seiten (15a, 15b) des Rahmens (12) einstückig verbunden sind, in denen die Öffnungen (23a, 23b) vorgesehen sind, und zwischen sich die je in eine Öffnung (23a, 23b) mündenden Kanäle (30) begrenzen.

5. Platte nach Anspruch 3 oder 4, **dadurch gekennzeichnet, dass** die Stege (26) dreieckförmig ausgebildet sind, wobei ihre Höhe von dem stromaufwärts liegenden Ende (15a) zum stromabwärts liegenden Ende (15b) der Wand (20) hin zunimmt, deren Neigungswinkel (α) in der Größenordnung von 1 bis 5 Grad liegt.

6. Platte nach einem der Ansprüche 3 bis 5, **dadurch gekennzeichnet, dass** zwischen den parallelen Stegen (26) jeder Fläche (21, 22) der schrägen Wand (20) quer liegende Verstärkungsstreben (31) vorgesehen sind.

7. Platte nach einem der vorhergehenden Ansprüche, **dadurch gekennzeichnet, dass** sie ein Einblockelement aus Kunststoff bildet.

8. Einheit (1) aus einer Stapelung von mindestens zwei Wendeplatten (10a, 10b) nach einem der vorhergehenden Ansprüche, von ebenen Abtropfmatten (40a, 40b), die an den Tragflächen (27, 28) jeder Platte (10a, 10b) befestigt sind, und von mindestens einem Käseformenblock (50), der zwischen den gegenüberliegenden Matten (40a, 40b) zwei aufeinander folgender Platten (10a, 10b) angeordnet ist.

9. Einheit nach Anspruch 8, **dadurch gekennzeichnet, dass** jede Matte (40a, 40b) mit Durchgangsöffnungen (42) versehen ist, wobei jede Öffnung (42) einer durch vier benachbart liegende Formen (51) des Formenblockes (50) gebildeten Buchse (52) gegenüberliegt.

10. Einheit nach Anspruch 8 oder 9, **dadurch gekennzeichnet, dass** jede Matte (40a, 40b) mit Positionierungsvorsprüngen versehen ist, die mit den auf den Platten (10a, 10b) vorgesehenen Befestigungsmitteln (34) zusammenwirken.
